# EUROPEAN PATENT APPLICATION

(11) **EP 3 653 044 A1**
(43) Date of publication of application: **20.05.2020**
(21) Application number: 19206986.2
(22) Date of filing: 04.11.2019
(51) Int. Cl.: A01G 9/18, A01G 9/24

(54) **ENVIRONMENT-CONTROLLED MULTI SPAN STRUCTURED GREENHOUSE**

(30) Priority: 15.11.2018 IN 201811042923
(71) Applicant: Gupta, Sat Parkash, Chandigarh (IN)
(72) Inventor: Gupta, Sat Parkash, Chandigarh (IN)
(74) Representative: Sach, Greg Robert

(57) **Abstract**

An environment-controlled multi span structured greenhouse comprising a roof, four sides, a release blower equipped with a heating module in relatively cold weather geographical locations, and a cooling module in relatively hot weather geographical locations, a capture blower, and a release blower a release manifold, and a capture manifold for low cost supplementary heating and cooling of the greenhouse air, obviating burning fossil fuels thereby reducing global warming, wherein the external surfaces of the roof and the external surface of at least one side of the greenhouse comprise a light diffusing film on predetermined areas and locations thereof together with a thermal shading film affixed; to the surface areas not comprising the light diffusing film, and wherein the greenhouse further comprises a mechanized module for adjusting the height of artificial light source and a module for melting snow.

## Description

### RELATED APPLICATION

The present invention comprises improvements over the Patent Application No. 201811029265 filed on August 3, 2018 and Indian Patent Application No. 201811042923 filed on November 15, 2018.

### FIELD OF INVENTION

The present invention relates to environment-controlled multi-span structured greenhouses comprising low cost supplementary heating and cooling for low cost food production. The present invention also relates to low cost heating of premises such as residential and commercial premises including, for example, but not limited to, offices, malls, multiplexes, hotels, industrial units and the like, while reducing or obviating the consumption and burning of fossil fuel. The present invention also relates to melting snow on surfaces such as greenhouse roof and sides, airports, runways, railways including for example but not limited to railway tracks and on roads in relatively cold weather locations.

The present invention also relates to clearing fog in the environment of greenhouse including for example airports, runways but not limited to railway tracks environment and to roads environment in relatively cold weather locations.

### BACKGROUND OF THE INVENTION

In relatively cold weather geographical locations, there is the problem of very high capital and operating costs of supplementary heating greenhouses, which mostly comprises burning very substantial amounts of fossil fuels which co-produces carbon dioxide and other pollutants, most of which increase global warming and some of which are also harmful to plants in the greenhouse.

When a fossil fuel burns, it radiates heat and releases carbon dioxide. Once in the atmosphere, some of that carbon dioxide can linger for thousands of years and trap heat that would otherwise leak into space. As reported by researchers online in "Greenhouse gas-caused warming felt in just months.",ScienceDaily.,2 June 2015, Carnegie Institution, over the lifetime of released carbon dioxide, the trapped heat exceeds the heat released during combustion by a factor of more than 100,000.

Likewise, in relatively cold weather geographical locations, there is the problem of very high capital and operating costs of heating premises such as residential and commercial premises including, for example, but not limited to, offices, malls, multiplexes, hotels, industrial units and the like, which mostly comprises burning very substantial amounts of fossil fuels to heat, for example, water to 70-80°C for circulation into the heating radiators.

Similarly, in relatively hot weather geographical locations, there is the problem of very high capital and operating costs of supplementary cooling greenhouses, which comprises using substantial electric energy mostly produced by burning substantial amounts of fossil fuels.

There is also the problem of maintaining the crops in greenhouses free from diseases, pathogens and harmful organisms and pests such as bacteria, fungi, viruses, insects and the like etc.

The intensity or brightness of light is a function of the distance from the light source following an inverse square relationship. There is the problem in greenhouses of adjusting the height of an artificial light source to maintain the artificial light a predetermined distance from the top of the growing plants, which is very labour and operating cost intensive. As such, the greenhouse growers mostly install the artificial light source at a predetermined distance above the top level of a fully grown plant, the level at which a growing plant would achieve after a long duration such that the plants during their earlier growth stages derive minimal benefit from the artificial light source which leads to reduced productivity.

There is also the problem of melting snow on various surfaces such as, for example, greenhouses but not limited to, roadways, railway tracks and airport runways. In many instances, snow on airport runways is melted by built-in heating modules in the concrete slabs of the runway mostly using fossil fuel or electric energy which is mostly a product of burning fossil fuels, whereas snow on roadways, railway tracks and the like is removed by earth moving machines which use diesel, a fossil fuel product.

Another very grave problem is dense fog in greenhouse environment which also reduces light transmission into the greenhouse, in the environment of Airport runways including railway tracks, environment but not limited to environment of roads all of which disrupts Air traffic Railway trains traffic and Roads traffic causing numerous accident deaths and wastage of time and fuel, roads environment because railway train, trucks, buses and cars have to move at very slow speed due to poor visibility.

As regards aero planes , international airports are mostly equipped with the facility of instrument landing system (ILS) which has also to be installed on the aero planes as well and are not without problem

Due to the complexity of ILS localizer and glide slope systems there are some limitations. Localizer system are sensitive to obstructions in the signal broadcast area, such as large buildings or hangers. Glide slope systems are also limited by the terrain in front of the glide slope antennas. If terrain is sloping or uneven, reflections can create and uneven glide path, causing unwanted needle deflections. Additionally, since the ILS signals are pointed in one with a constant angle of descent. Installation of an ILS can be costly because of sitting criteria and the complexity of the antenna system.

ILS critical areas and ILS sensitive areas are established to avoid hazardous reflections that would affect the radiated signal. The location of these critical areas can prevent aircraft from using certain taxiways leading to delays in takeoffs, increased hold times and increased separation between aircraft.

This technology is only surpassed by the CAT IIIC system, which allows landing in near-zero visibility. CAT IIIC is three to four times more expensive to operate than CAT IIIB and just a handful of airports in the world, including the JFK in New York and London's Heathrow, are equipped with this facility. Despite this, flight disruptions are a regular feature.

One reason for this is that all pilots are not familiar with the system. "Not all pilots flying domestic airplanes are trained to land on the CAT IIIB system.

The present invention discloses a tangible low cost method to obviate the fog related problems particularly for road and train traffic, and as a collateral for the aero planes landing and taking off.

Indian Patent Application No. 201711025454, filed on July 18, 2017, and patent applications claiming priority therefrom, including U.S. Patent Application No. 15/844,354, all filed by the same present inventor, relate to an environment-controlled multi-span structured greenhouse comprising a compressor which is used mostly for adjusting the relative humidity of the greenhouse air to a predetermined set point in relatively cold weather geographical locations and for adjusting the temperature of the greenhouse air to a predetermined set point in the relatively hot weather geographical locations.

There is still a further need and scope for overcoming the above-identified problems associated with heating and cooling of greenhouse air and further means for low cost of food production.

### OBJECTS OF THE INVENTION

It is an object of the present invention to overcome the cost associated with heating and cooling air of greenhouses and heating residential and commercial premises including,
but not limited to, offices, malls, multiplexes, hotels, industrial units and the like, and/or to provide the consumer with a useful or commercial choice.

It is also an object of the present invention to obviate the requirement for, and use of, a compressor which is relatively capital and operating cost intensive.

### SUMMARY OF THE INVENTION

In accordance with an aspect of the present invention, there is provided an environment-controlled, multi-span structured greenhouse comprising a roof and four sides wherein, in relatively hot weather geographical locations, the greenhouse further comprises: a light diffusing film, in one embodiment, a light diffusing white film, of a predetermined thickness, affixed to the external surface of the greenhouse roof and to the external surface of at least one side of the greenhouse at predetermined areas and locations based upon the climate pattern of the geographical location, wherein the external surfaces that do not have the light diffusing film affixed thereto, have a thermal shading film of a predetermined thickness affixed thereto at predetermined areas and locations. for admitting into the greenhouse only a predetermined deficient solar radiation for minimizing needless heat gain, reducing greenhouse air temperature and minimizing supplementary cooling cost while availing the benefits of natural light.

In another aspect of the present invention, in relatively cold weather geographical locations, the release blower is equipped with a heating module for heating the greenhouse air for maintaining the greenhouse air at a predetermined temperature set point.

In another aspect of the present invention, in relatively hot weather geographical locations, the release blower is equipped with a cooling module for cooling the greenhouse air for maintaining the greenhouse air temperature at a predetermined temperature set point.

In another aspect of the present invention, in relatively hot weather geographical locations, the relative humidity of the greenhouse air is maintained at a predetermined set point by injecting, using a small automated pump, fine droplets of water from a fogger manifold into the outlet pipe of the release blower at predetermined locations along the length of the outlet pipe.

In another aspect of the present invention, in relatively cold weather geographical locations, the relative humidity of the greenhouse air is maintained at a point during heating the greenhouse air using a release blower together with a heating module which lowers the moisture content and maintains the humidity of the greenhouse air relative to a predetermined temperature set point of the greenhouse air.

In another aspect of the present invention, the greenhouse comprises a module, in one embodiment a mechanized module, for adjusting the height of the artificial light source for maintaining a predetermined distance between the artificial light source and the top of the growing plant. Accordingly, this aspect satisfies the need for raising the height of the artificial light source to maintain a predetermined distance from the top of the growing plants, and in one embodiment uses a mechanized module for this purpose.

In another aspect of the present invention, the greenhouse further comprises at least one camera, in an embodiment, a magnifying camera, for capturing images of suspected diseased plants and parts thereof growing in the greenhouse or of pests, such as insects, in, on or around plants growing in the greenhouse, wherein the captured images are uploaded onto a computer and compared and matched with reference images of diseased plants or parts thereof and of plant pests stored on the computer wherein a positive match between the uploaded image and the stored image dictates the type of treatment and the treatment regimen. In an embodiment of the present invention, the parts of the suspected diseased plants may be roots, stems, leaves, buds, flowers, fruits, etc. In another embodiment of the present invention, a crop patrolling officer of the greenhouse may be equipped with the camera on, for example, a mobile phone, for capturing images, during patrolling the greenhouse, of suspected diseased plants or parts thereof and of plant pests, which images are uploaded onto a computer.

In another aspect of the present invention, there is provided a system and/or method for melting snow on a surface, the system and/or method comprising at least two blowers, each blower equipped with a heating module, each blower mounted on a motorized trolley wherein at least one motorized trolley is located staggered on each of the two sides of the surface for producing hot air of a predetermined temperature for melting snow on the surface. In another aspect of the present invention, based upon the length of the surface, there are a plurality of blowers located staggered at predetermined distances between each other.

In another aspect of the present invention, the surface is the surface of an airport runway, a roadway, a railway track and the like.

In another aspect of the present invention, an electric heating module of a predetermined temperature range is installed in a blower for all heating needs of small-scale industries. Accordingly, this module saves substantial fossil fuel.

In another aspect of the present invention, in relatively cold weather geographical locations, a blower together with a heating module is provided which is used for heating the local environment of a location occupied by persons for maintaining the temperature of that location at a predetermined temperature set point.

In another aspect of the present invention, in relatively hot weather geographical locations, a blower together with a cooling module is provided which is used for cooling the local environment of a location occupied by persons for maintaining that location at a predetermined temperature set point.

In another aspect of the present invention, there is provided a tangible solution to the problem of the very high cost of heating greenhouses and residential and commercial premises including, but not limited to, offices, malls, multiplexes, hotels, industrial units and the like, which are located in relatively cold weather geographical locations, wherein these premises would otherwise be heated by burning very substantial amounts of fossil fuels to heat water to 70-90°C for circulation into the heating radiators.

In another aspect of the present invention, there is provided a greenhouse, wherein in relatively cold weather geographical locations, the greenhouse comprises a release blower equipped with a heating module for heating the greenhouse air for maintaining the temperature of the greenhouse air at a predetermined set point

In another aspect of the present invention, in relatively hot weather geographical locations, the greenhouse comprises a release blower equipped with a cooling module for cooling the greenhouse air for maintaining the temperature of the greenhouse air at a predetermined set point.

In another aspect of the present invention, there is provided a tangible solution to the problem of the very high cost of supplementary cooling of a greenhouse in relatively hot weather geographical locations which would otherwise be cooled using electric energy produced by burning of fossil fuels.

In another aspect of the present invention, there is provided a mechanized module for adjusting the height of an artificial light source in a greenhouse for maintaining a predetermined distance between the artificial light source and the top of a plant growing in the greenhouse throughout all the growth stages of the growing plant.

In another aspect of the present invention, the greenhouse further comprises at least one camera, in one embodiment, a magnifying camera, for capturing images of a plant growing in the greenhouse, in one embodiment, a suspected diseased plant, or part thereof, for example, but not limited to, roots, stems, leaves, buds, flowers and the like, or of pests, in oneembodiment, insects, in, on or around the plant, wherein the captured images are uploaded onto a computer wherein reference images of diseased plants or parts of plants and pests are already stored for matching with the uploaded images wherein the recommended treatment, including the treatment regimen, comprising for example, the dose and frequency of the treatment, such as for example, but not limited to, the dose and frequency of application of chemicals to the plant or parts thereof, such as pesticides, herbicides, fungicides or the like, the dose and frequency of application of fertilizer or the like to the plant or parts thereof, the dose and frequency of application of water solution to the plant or parts thereof, etc., wherein the recommended treatment and treatment regimen is displayed on the computer together with the uploaded image and the matched image for printing the recommended treatment for execution which is automatically stored in a file to trace treatment history of a crop of plants grown in the greenhouse during its life time. In an embodiment of the present invention, a greenhouse crop patrolling officer may be equipped with the camera when patrolling the greenhouse.

The features described with respect to one aspect of the present invention also apply, where applicable, to all other aspects of the present invention. Furthermore, different combinations of described features are herein described and claimed even when not expressly stated.

### BRIEF DESCRIPTION OF THE DRAWINGS

In order that the present invention can be more readily understood, reference will now be made to the accompanying drawings wherein:
Figure 1 illustrates an inverse square relationship between light source and the distance from the light source.
Figure 2 illustrates a mechanized module of the present invention for adjusting the height of the artificial light source to maintain a predetermined distance from the growing plant in various growing stages. Reference Numerals in Figure 2:
   100 - pipe;
   110 - Upper surface of the pipe;
   130- Bottom surface of the pipe;
   130 - Bottom of adjoining truss for welding ball bearing with mild steel strip
   140 - Ball bearing with mounting end plugged;
   150 - Ball bearing with small hole in the plugged end for running electric main wire;
   160 - Mild steel strip on ball bearing for welding with the bottom end of the adjoining truss of the greenhouse;
   170 - Connections to the artificial lighting source;
   180 - Electric wire running full lengths of growing media beds; and
   190 - Handle.

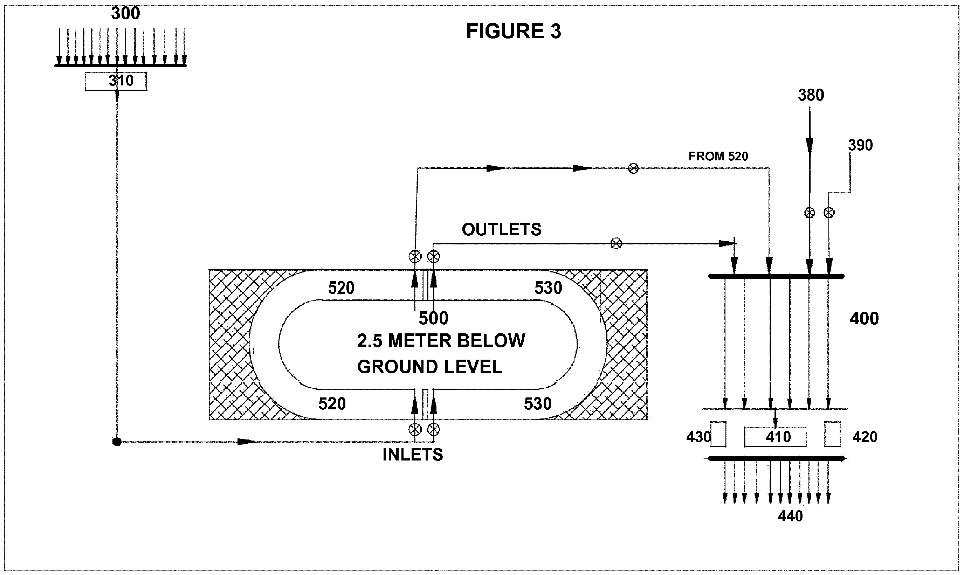

Figure 3 illustrates the components of an environment-controlled, multi-span structured greenhouse in accordance with an embodiment of the present invention. Reference Numerals in Figure 3:
   300 - Capture manifold;
   310 - From capture blower;
   380 - From BT hot air tank;
   390 - From BT CO2 tank;
   400 - Release manifold;
   410 - Release blower;
   420 - Heating module for relatively cold geographical location;
   430 - Cooling module for relatively hot geographical location;
   440 - Individual release pipes;
   500 - Earth tube heat exchanger;
   520 - Compartment storing oxygen rich greenhouse air; and
   530 - Compartment storing carbon dioxide rich greenhouse air.

### DETAILED DESCRIPTION OF THE PREFERRED EMBODIMENTS

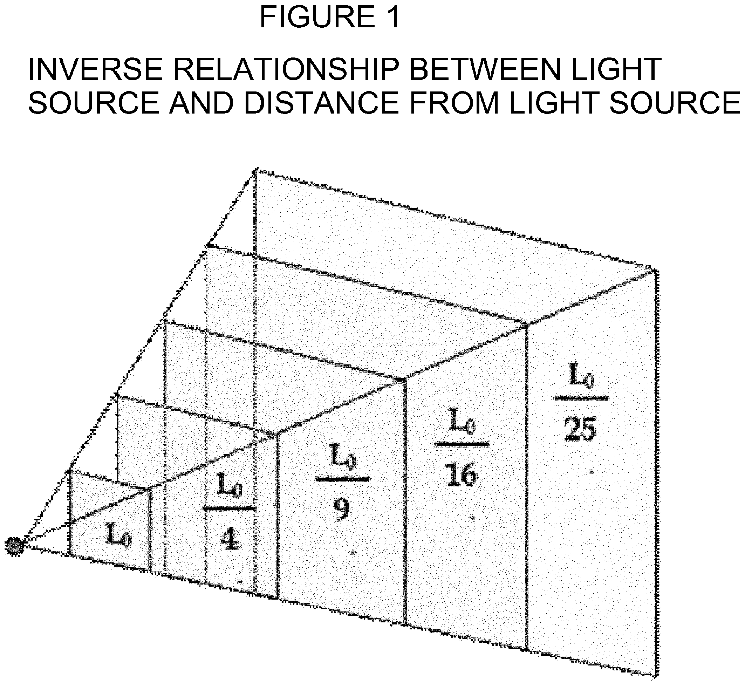

The intensity or brightness of light as a function of the distance from the light source follows an inverse square relationship. This relationship is illustrated by Figure 1, which
shows the apparent brightness of a source with luminosity L0 at distances r, 2r, 3r, etc. As the distance increases, the light spreads out over a larger surface and the surface brightness decreases in accordance with a "one over r squared" relationship. The decrease goes as r squared because the area over which the light is spread is proportional to the distance squared.

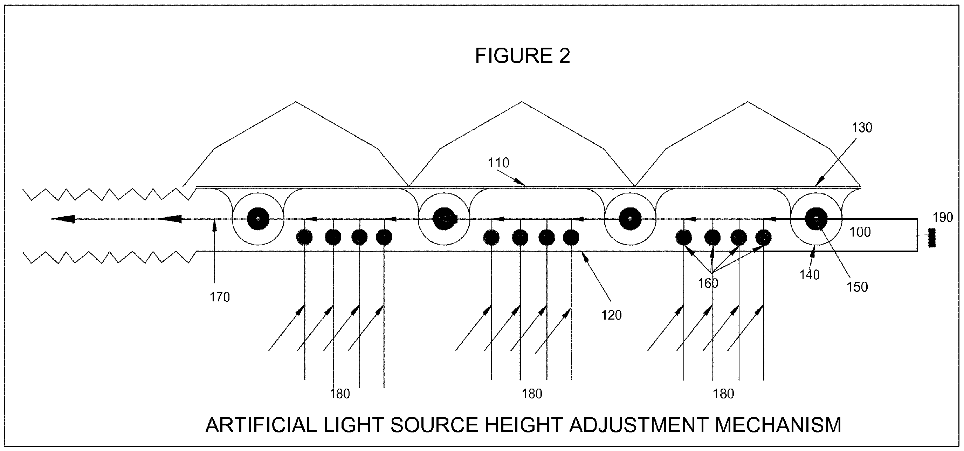

Turning to Figure 2, the mechanized module for adjusting the height of the artificial light source comprises a mild steel pipe 100 having an upper surface 110 and a bottom surface 120 and ball bearings 150 mounted on the mild steel pipe 100 between the upper surface 110 and the bottom surface 120. The mild steel pipe 100 with ball bearings 140 is welded to the bottom 130 of the adjoining truss of the greenhouse. The mounting end of the ball bearings 140 are plugged and the plugged mounting end has a small hole 150 for running the main electrical wire. Ball bearings 140 have a mild steel strip 160 for welding with the bottom end of the adjoining truss of the greenhouse. The mechanized module further comprises connections 170 to electrical wires 180 comprising the artificial lighting sources located at the free ends thereof and running the full lengths of the growing media beds. In operation, when the artificial lighting sources are to be raised up and away from the tops of the plants growing in the media beds of the greenhouse, the mild steel pipe 100 is rotated in one direction, for example, in the clockwise direction, using, for example, the handle 190, and the electrical wires 180 are spooled onto, and wrap around, the mild steel pipe 100, drawing the artificial lighting sources located at the free ends of the electrical wires 180, upwards and away from the tops of the plants growing in the media beds. When the artificial lighting sources are to be lowered down and towards the tops of the plants growing in the media beds of the greenhouse, the mild steel pipe 100 is rotated in the opposite direction, for example, in the counter clockwise direction, using, for example, the handle 190, and the electrical wires 180 are unspooled from, and unwrapped from around, the mild steel pipe 100, lowering the artificial lighting sources located at the free ends of the electrical wires 180, downwards and towards the tops of the plants growing in the media beds. In operation, the handle 190 can be manually operated via by a human operator, to rotate the mild steel pipe 100 or the handle 190 can be automatically operated, via an automated mechanism, to rotate the mild steel pipe 100.

Turning to Figure 3, in relatively hot weather geographical locations, during dark hours, relatively hot carbon dioxide rich greenhouse air, and during light hours, relatively hot oxygen rich greenhouse air, is captured by the capture manifold 300 together with the capture blower 310 and is blown through inlets into the earth tube heat exchanger 500, in this embodiment, located approximately 2.5 meters below ground level, where the captured relatively hot carbon dioxide rich air is stored in compartment 520 of the earth tube heat exchanger 500 and the captured relatively hot oxygen rich air is stored in compartment 530 of the earth tube heat exchanger 500. While being stored in compartments 520 and 530, the temperature of the stored relatively hot carbon dioxide rich air and the stored relatively hot oxygen rich air, respectively, is lowered (cooled) or "conditioned" to be substantially equal to the temperature of the earth tube heat exchanger 500.The stored carbon dioxide rich conditioned air from compartment 520 and the stored oxygen rich conditioned air from compartment 530 exits the earth tube heat exchanger 500 and is captured by the release manifold 400 together with the release blower 410 and if required, the temperature thereof is further lowered (cooled) to a predetermined temperature set point by the cooling module 430 and is released back into the greenhouse via individual release pipes 440.

In relatively cold weather geographical locations, during dark hours, relatively cool carbon dioxide rich greenhouse air, and during light hours, relatively cool oxygen rich greenhouse air, is captured by the capture manifold 300 together with the capture blower 310 and is blown through inlets into the earth tube heat exchanger 500, in this embodiment, located approximately 2.5 meters below ground level, where the captured relatively cool carbon dioxide rich air is stored in compartment 520 and the captured cool oxygen rich air is stored in compartment 530. While being stored in compartments 520 and 530, the temperature of the stored relatively cool carbon dioxide rich air and the stored relatively cool oxygen rich air, respectively, is raised (heated) or "conditioned" to be substantially equal to the temperature of the earth tube heat exchanger 500.The stored carbon dioxide rich conditioned air from compartment 520 and the stored oxygen rich conditioned air from compartment 530 exits the earth tube heat exchanger 500 and is captured by the release manifold 400 together with the release blower 410 and if required, the temperature thereof is further lowered (heated) to a predetermined temperature set point by the heating module 420 and is released back into the greenhouse via individual release pipes 440.

In accordance with an aspect of the present invention there is provided an environment - controlled multi span structured greenhouse comprising a capture manifold and a capture blower for capturing form the greenhouse , carbon dioxide rich air during dark hours and oxygen rich air during dark light hours and for blowing the captured air into the respective two compartments of an earth tube heat exchanger, the earth tube heat exchanger comprising a fist compartment for storing the captured carbon dioxide rich air and a second compartment for storing the captured oxygen rich air, the earth tube heat exchanger for conditioning the stored air by increasing or decreasing the temperature of the stored air to substantially equal to the average constant temperature of the earth tube heat exchanger a release manifold and a release blower for releasing the stored carbon dioxide rich conditioned air and the oxygen rich conditioned air from the earth tube heat exchanger and for blowing the conditioned air, in relatively cold weather geographical locations into a heating module for further heating the conditioned air or in relatively hot weather geographical locations, into a cooling module for further cooling the conditioned air and for releasing the air back into the greenhouse.

The earth tube heat exchanger is an underground heat exchanger that can capture heat from and/or dissipate heat to the ground and uses the earth's soil strata average constant subterranean temperature to warm or cool the air captured from the greenhouse for heat recovery. The earth tube heat exchanger is known by several other names, including, but not limited to: ground-coupled heat exchangers, earth cooling tubes, earth warming tubes, earth-air heat exchangers, air-to-soil heat exchangers, earth channels, earth canals, earth-air tunnel systems, ground tube heat exchangers, hypocausts, subsoil heat exchangers, thermal labyrinths, underground air pipes, and others.

In an embodiment of the present invention, the greenhouse, in relatively hot weather geographical locations, comprises a light diffusing film, in one embodiment a light diffusing white film, of a predetermined thickness affixed to the external surface of the greenhouse roof and the external surface of at least one side of the greenhouse at predetermined areas and
at predetermined locations based upon the climate pattern of the geographical location. The areas not comprising the light diffusing film comprise a thermal shading film of a predetermined thickness such that only a predetermined deficient solar radiation is admitted into the greenhouse for reducing needless heat gain, reducing the greenhouse air temperature and minimizing the greenhouse supplementary cooling cost while availing the benefits of natural light.

In an another embodiment of the present invention, there is provided an environment-controlled, multi-span structured greenhouse comprising: a capture manifold, a capture blower, a release manifold, a release blower, a heating module in relatively cold weather geographical locations and a cooling module in relatively hot weather geographical locations, wherein heating module and cooling module functions with the release blower, together with a release manifold an artificial light source, a mechanized module for adjusting the height of the artificial light source and a module for maintaining the greenhouse crop free from diseases, organisms such as fungi, bacteria, pathogens, viruses and from harmful pests, insects and the like.

In another embodiment of the present invention, in relatively cold weather geographical locations , the greenhouse comprises a release blower equipped with a heating module for heating the greenhouse air for maintaining the greenhouse air temperature at a predetermined temperature set point. In this embodiment the release blower together with the release manifold and the heating module realeases hot air into the greenhouse at the level of cultivation for greenhouse supplementary heating. During supplementary heating of the greenhouse the hot air released into the greenhouse at the level of cultivation rises and cools thus becoming lower temperature greenhouse air relative to the temperature of the hot air released at the level of cultivation. This relatively lower temperature greenhouse air collects above the plants growing in the greenhouse in the upper portion of the greenhouse , including the upper portion of the ceiling. The relatively lower temperature carbon dioxide rich greenhouse air is then captured by the capture blower together with the capture manifold and is stored into the first compartment and the captured relatively lower temperature oxygen rich air is stored is stored into the second compartment of the earth tube heat exchanger wherein the temperature of the stored air rises or falls equal to the average thermal constant temperature of the location

In another embodiment of the present invention, in relatively hot weather geographical locations, the greenhouse comprises a release blower equipped with a cooling module and functions with the release manifold for releasing cooler air for cooling the greenhouse air for maintaining the greenhouse air temperature at a predetermined temperature set point.

In another embodiment of the present invention, in relatively hot weather geographical locations, the relative humidity of the greenhouse air is maintained at a predetermined set point by injecting fine droplets of water from a fogger manifold into the outlet pipe of the release blower using an automated small water pump.

In another embodiment of the present invention, in relatively cold weather geographical locations, the relative humidity of the greenhouse air is automatically maintained during heating the greenhouse air which removes the moisture from the cold air, which removed moisture settles at the bottom of the outlet pipe of the release blower outlet pipe is provided with a predetermined slope to drain off the moisture at a predetermined location.

In another embodiment of the present invention, the greenhouse comprises an artificial light source and a mechanized module for adjusting the height of the artificial light source to maintain a predetermined distance between the artificial light source and the top of the growing plants, wherein the module comprises a pipe comprising ball bearings, for example, set at 5 meters centers, with the mounting end of the ball bearings plugged and with a small hole contained therein for running an electric main wire together with about two thirds of the circumference of the ball bearing comprising a mild steel strip for welding onto the bottom of an adjoining truss of the greenhouse wherein main electric wires run on the upper surface of the pipe comprising connections for all of the artificial lighting in respective rows of growing media bags or beds.

In another embodiment of the present invention, the greenhouse is further equipped with at least one camera, in one embodiment, a magnifying camera, for capturing images of abnormal roots, stems, leaves, buds and fruits of suspected diseased plants and of pests such as insects, on, in or around the plants. The images are uploaded onto a computer wherein reference images of all kinds of abnormalities of diseased plants' roots, stems leaves, buds, fruits etc. and all kinds of pests, such as insects, are already stored for matching the uploaded images with the stored images wherein the type of treatment and treatment regime, including the remedy, dose and frequency of dose, including fertilizer and water, solution together with the uploaded image and the matching stored image are displayed. The treatment and treatment regimen is automatically stored into a file and may be printed to trace the treatment history of the greenhouse crop over its life time. In another embodiment of the present invention, a greenhouse crop patrolling officer may be equipped with the camera for capturing the images during patrolling the greenhouse.

In another embodiment of the present invention, a system and/or method is disclosed for melting snow on a surface, including greenhouse roof airport runways, railway tracks, roadways, and the like, wherein the system and/or method comprises using two blowers each with a heating module each mounted on a motorized trolley, each one on staggered locations on the two sides of the surface for producing hot air of a predetermined temperature for melting snow on the surface.

In another embodiment of the present invention, there is provided an electric heating module of a predetermined temperature range installed in the blower for all heating needs including heating of small furnaces in medium and small scale industries thereby saving substantial fossil fuel.

In another embodiment of the present invention, wherein in relatively cold weather geographical locations, a blower together with a heating module is provided for heating the local environment of a location occupied by people for maintaining that location at a predetermined temperature set point.

In another embodiment of the present invention, wherein in relatively hot weather geographical locations, a blower together with a cooling module is provided for cooling the local environment of a location occupied by people for maintaining that location at a predetermined temperature set point.

During cold early morning hours when temperature decreases and relative humidity saturates dense fog in the greenhouse which also reduces light transmission into greenhouse.

In another embodiment of the present invention fog in the greenhouse environment and into environment of Airport runways, including but not limited to railway tracks , roads and the like is evaporated by using compressor together with heating module of predetermined temperature. Two compressors together with heating module are installed on the outside of aeroplanes at suitable locations so that fog would be evaporated before the plane reaches the foggy environment and would not have to pass through the clouds throughout its downward journey for landing this facility would also unable the plane to take off even in thick foggy environment.

In another embodiment compressor together with heating module are installed at the outside the center of the railway engines so that as the trains moves forward at full speed. With a clear view of the upcoming track. Similar treatment for heavy vehicles like trucks and also for car.

In another embodiment the airport runways environment can be maintained free from fog, by using blowers equipped with heating module

Throughout the description and claims of this specification the word "comprise" and variations of that word such as "comprises" and "comprising", are not intended to exclude other additives, components, integers or steps.

The above description is to be to in no way limit the scope of the present invention which is amendable to various modifications and improvements within the scope of the present invention which will be evident to those skilled in the art. Furthermore, the present invention is not restricted to greenhouse applications only. Although certain embodiments have been described those of skill in the art will appreciate that variations and modifications may be made without departing from the scope thereof as defined by the appended claims.

## Claims

1. An environment-controlled, multi-span structured greenhouse in relatively hot weather geographical locations comprising:
i) a roof,
ii) four sides,
iii) a capture manifold together with a capture blower for capturing carbon dioxide rich air from above one or more plants growing in the greenhouse during dark hours and for
capturing oxygen rich air from the greenhouse during light hours and blowing the captured air into an earth tube heat exchanger for storing and conditioning the captured air, wherein
a temperature of the captured air equals to an average thermal constant temperature of the earth tube heat exchanger of the geographical location; and
iv) further comprising an artificial light source and a mechanized module for adjusting a height of the artificial light source and for maintaining a predetermined distance between the artificial light source and a top of a growing plant in the greenhouse throughout all growth stages of the growing plant;
v) further comprising a magnifying camera for capturing images of parts of suspected diseased plants growing in the greenhouse or for capturing images of pests on plants growing in the greenhouse, wherein the captured images are uploaded onto a computer and compared and matched with reference images of diseased parts of plants and pests stored on the computer, wherein a positive match between the uploaded image and the stored image dictates a treatment regimen;
wherein the earth tube heat exchanger comprises:
vi) a first compartment comprising a first set of reinforced concerete pipes for storing and conditioning captured carbon dioxide rich air, to a relatively cooler temperature, in relatively hot weather geographical locations and to a relatively warmer temperature in relatively cold weather geographical locations wherein the first compartment having an inlet pipe and an outlet pipe; and
a second compartment comprising a second set of reinforced concerete pipes for storing and conditioning captured oxygen rich air, to a relatively cooler temperature, in relatively hot weather geographical locations and to a relatively warmer temperature in relatively cold weather geographical locations wherein the second compartment having an inlet pipe and an outlet pipe; and
vii) wherein a release manifold functions with a release blower equipped with a coolingmodule for releasing the stored and conditioned carbon dioxide rich air during light hours and the stored and conditioned oxygen rich air during dark hours into the greenhouse through a plurality of individual release pipes.

2. The environment-controlled, multi-span structured greenhouse of claim 1, wherein in relatively cold weather geographical locations, hot air is released into the greenhouse at a cultivation level, wherein, after heating the plants, a temperature of the hot air is reduced and collects above the plants in an upper portion of the greenhouse,
wherein the reduced temperature air is captured by the capture blower together with capture manifold, wherein relatively lower temperature carbon dioxide rich air is stored in the first compartment of the earth tube heat exchanger whereas relatively lower temperature hot oxygen rich air is stored in the second compartment.

3. The environment-controlled, multi span structured greenhouse of claim 1, wherein in relatively hot weather geographical locations, external surfaces of the greenhouse roof together with an external surface of at least one side of the greenhouse comprise a light diffusing film of a predetermined thickness affixed to predetermined areas and locations thereof based upon a climate pattern of the geographical location and wherein the predetermined areas that do not comprise the light diffusing film, comprise a thermal shading film of a predetermined thickness for admitting into the greenhouse only a predetermined deficient solar radiation for minimizing needless heat gain, reducing greenhouse air temperature and minimizing supplementary cooling cost while availing the benefits of natural light.

4. The environment-controlled, multi span structured greenhouse of claim 1, wherein, in relatively cold weather geographical locations, the greenhouse comprises a heating module which functions with the release blower together with release manifold for releasing into a greenhouse hot air for heating greenhouse air and for maintaining a temperature of the greenhouse air at a predetermined set point.

5. The environment-controlled, multi span structured greenhouse of claim 1, wherein, in relatively hot weather geographical locations, the cooling module functions with the release blower together with release manifold for releasing into a greenhouse cooled air for cooling greenhouse air and for maintaining a temperature of the greenhouse air at a predetermined set point.

6. The environment-controlled, multi span structured greenhouse of claim 1, wherein, in relatively hot weather geographical locations, the greenhouse further comprises an automated water pump and a fogger manifold for injecting fine droplets of water into an outlet pipe of the release blower and for maintaining a relative humidity of a greenhouse air at a predetermined set point.

7. The environment-controlled, multi span structured greenhouse of claim 1, wherein, in relatively cold weather geographical locations, a greenhouse air relative humidity is maintained at a point wherein the moisture content of a greenhouse air during heating which lowers the moisture content automatically maintaining the relative humidity of the greenhouse air at a point corresponding to a greenhouse air temperature predetermined set point.

8. The environment-controlled, multi span structured greenhouse of claim 1, wherein the treatment regimen comprises dose, frequency mode foliar or drench and the matched uploaded and stored images are displayed on the computer screen for printing a prescribed treatment for execution which is automatically stored in a file to trace treatment history of a crop during its life time.

9. The environment-controlled, multi span structured greenhouse of claim 1, wherein the first and second compartments of earth tube heat exchanger comprise reinforced concrete pipes having inlet and outlet plastic pipes such that the stored captured carbon dioxide rich air and captured oxygen rich air are conditioned equal to the average thermal constant temperature of the earth tube heat exchanger of the location

10. The environment-controlled, multi span structured greenhouse of claim 1 wherein the release blower together with the heating module clears fog created during cold early morning hours when greenhouse air temperature falls from interior surfaces of the roof and the sides by releasing hot air into the greenhouse.

11. The environment-controlled, multi span structured greenhouse of claim 1, wherein the inlet pipe and the outlet pipe of the first compartment and the second compartment are polyvinyl chloride
